# EUROPEAN PATENT APPLICATION

(11) **EP 4 852 026 A1**
(43) Date of publication of application: **09.12.2026**
(21) Application number: 25870439.4
(22) Date of filing: 14.07.2025
(51) Int. Cl.: H01B 7/14, H01B 7/282, H01B 7/285, H01B 7/17, H01B 11/22, H01B 13/00

(54) **SUBMARINE CABLE AND MANUFACTURING METHOD**

(30) Priority: 30.09.2024 CN 202411395616
(71) Applicant: Zhongtian Technology Submarine Cable Co., Ltd., Nantong, Jiangsu 226000 (CN); Jiangsu Zhongtian Technology Co., Ltd., Nantong, Jiangsu 226000 (CN); South Sea Submarine Cable Co., Ltd., Shanwei, Guangdong 516545 (CN); Zhongtian Dafeng Submarine Cable Co., Ltd., Jiangsu 224145 (CN); Shandong Offshore Engineering Cable & Wire Co., Ltd., Weihai, Shandong 264515 (CN)
(72) Inventor: ZHAO, Youlin, Nantong, Jiangsu 226000 (CN); ZHANG, Hongliang, Nantong, Jiangsu 226000 (CN); HU, Ming, Nantong, Jiangsu 226000 (CN); DU, Qiang, Nantong, Jiangsu 226000 (CN); LIU, Lei, Nantong, Jiangsu 226000 (CN); QIAO, Jing, Nantong, Jiangsu 226000 (CN)
(74) Representative: Boult Wade Tennant LLP
(86) International application number: PCT/CN2025/108361
(87) International publication number: WO 2026/066527

(57) **Abstract**

Embodiments of the present application provide a submarine cable and a manufacturing method thereof, belonging to the technical field of cables. The submarine cable includes a water-blocking conductor and a conductor shielding layer, an insulation layer, an insulation shielding layer, a water-blocking tape wrapping layer, a first protective layer, a first metal armor layer, an optical fiber unit, an inner lining layer, a second metal armor layer, and an outer jacket layer, which are sequentially wrapped around an outside of the water-blocking conductor. The water-blocking conductor includes a conductor, a water-blocking adhesive, and a water-blocking tape. The conductor is made of at least two metal monofilaments stranded together. The water-blocking adhesive fills stranded gaps between the metal monofilaments, and the water-blocking tape is wrapped around the conductor and the water-blocking adhesive. The submarine cable and the manufacturing method thereof provided by the embodiments of the present application solve the problem in the prior art that submarine cables are difficult to meet deep-sea applications.

## Description

This application claims priority to the Chinese patent application No. 202411395616.3, filed with the China National Intellectual Property Administration on September 30, 2024, entitled "Submarine Cable and Manufacturing Method for the Same". The afore-mentioned patent application is hereby incorporated by reference in its entirety.

### TECHNICAL FIELD

The present application relates to the technical field of cables, and in particular to a submarine cable and a manufacturing method thereof.

### BACKGROUND

With the rapid development of offshore wind power, nearshore resources are being increasingly depleted, and deep-sea development is gradually becoming a major focus in the future.

In the related art, water blocking for the conductor inside submarine cables mainly relies solely on a water-blocking tape or a conventional water-blocking adhesive, which is generally applied at water depths of 500 meters or less. Existing industrially applied submarine cables are typically used at water depths of 100 meters or less.

However, the above-mentioned submarine cables are all difficult to meet deep-sea applications.

### SUMMARY

Embodiments of the present application provide a submarine cable and a manufacturing method thereof, so as to solve the problem in the prior art that submarine cables are difficult to meet the deep-sea applications.

To achieve the above objectives, embodiments of the present application provide the following technical solutions.

In one aspect, an embodiment of the present application provides a submarine cable, including a water-blocking conductor and a conductor shielding layer, an insulation layer, an insulation shielding layer, a water-blocking tape wrapping layer, a first protective layer, a first metal armor layer, an optical fiber unit, an inner lining layer, a second metal armor layer, and an outer jacket layer which are sequentially wrapped around an outside of the water-blocking conductor; where the water-blocking conductor includes a conductor, a water-blocking adhesive, and a water-blocking tape, the conductor being formed by at least two metal monofilaments stranded together, the water-blocking adhesive filling the stranded gaps between the metal monofilaments, and the water-blocking tape being wrapped around the conductor and the water-blocking adhesive.

In a possible implementation, the water-blocking tape includes a seawater-blocking type water-blocking tape, and a thickness of the water-blocking tape is 0.3±0.03 mm; the water-blocking adhesive has a viscosity of 200,000 to 300,000 mpa·s at 25°C.

In a possible implementation, at least two filling protection layers are further included. Both the filling protection layers and the optical fiber unit are composited within the first metal armor layer. The filling protection layers are distributed on two sides of the optical fiber unit so as to protect the optical fiber unit.

In a possible implementation, the filling protection layer includes a first metal wire and a second protective layer, where the second protective layer is extruded over the first metal wire, and the optical fiber unit is in contact with the second protective layer.

In a possible implementation, the optical fiber unit includes an optical fiber main body and an optical fiber protective layer wrapped around an outside of the optical fiber main body.

In a possible implementation, the first metal armor layer includes a second metal wire wound around an outside of the first protective layer, and the second metal armor layer includes a third metal wire wound around an outside of the inner lining layer; the second metal wire and the third metal wire are arranged to have different winding directions.

In another aspect, an embodiment of the present application provides a manufacturing method for the submarine cable applied to any one of the above embodiments, including the following steps: stranding at least two metal monofilaments together to form a conductor, filling a water-blocking adhesive into stranded gaps between the metal monofilaments, and wrapping a water-blocking tape around the conductor and the water-blocking adhesive to form a water-blocking conductor; wrapping a conductor shielding layer around the water-blocking conductor; sequentially arranging an insulation layer, an insulation shielding layer, and a water-blocking tape wrapping layer outside the conductor shielding layer; wrapping a first protective layer around the water-blocking tape wrapping layer; arranging a first metal armor layer outside the first protective layer, and compositing an optical fiber unit in gaps of the first metal armor layer; and sequentially arranging an inner lining layer, a second metal armor layer, and an outer jacket layer outside the first metal armor layer.

In a possible implementation, filling the water-blocking adhesive into the stranded gaps between the metal monofilaments includes: using an adhesive applicator system to fill the water-blocking adhesive into the stranded gaps between the metal monofilaments, where the adhesive applicator system includes an adhesive applicator die and at least one adhesive storage tank for storing the water-blocking adhesive; the adhesive applicator die is internally provided with an adhesive application channel so that the conductor can pass through the adhesive application channel; each adhesive storage tank is provided with an adhesive delivery pipe and a gas pipe, the adhesive storage tank being communicated with the adhesive application channel through the adhesive delivery pipe, and the gas pipe being communicated with the adhesive storage tank; an end of the adhesive delivery pipe facing the adhesive storage tank extends into the water-blocking adhesive, and an end of the gas pipe facing the adhesive storage tank is located outside the water-blocking adhesive, so that gas is introduced into the adhesive storage tank through the gas pipe to press the water-blocking adhesive into the adhesive application channel and apply the water-blocking adhesive to the stranded gaps between the metal monofilaments.

In a possible implementation, compositing the optical fiber unit in the gaps of the first metal armor layer includes: conveying the optical fiber unit by a pay-off device, and then compositing the optical fiber unit into the first metal armor layer, where the pay-off device includes a frame, a protection tube, and at least one pair of pressure roller assemblies; the pressure roller assembly includes a mounting seat and pressure rollers rotatably disposed on the mounting seat, the mounting seat being disposed on the frame, the two pressure rollers of the same pair clamping the optical fiber unit therebetween, at least one pressure roller being provided with a control member for controlling the rotation of the pressure roller, so as to pull and convey the optical fiber unit when the pressure roller rotates; the protection tube has a conveying channel formed therein for the optical fiber unit to pass through, so that the optical fiber unit is conveyed inside the protection tube.

In a possible implementation, in the pressure roller assemblies of the same pair, at least one mounting seat is slidably disposed on the frame, so as to adjust a distance between the two pressure rollers of the same pair.

The embodiments of the present application provide a submarine cable and a manufacturing method thereof. The submarine cable includes a water-blocking conductor and a conductor shielding layer, an insulation layer, an insulation shielding layer, a water-blocking tape wrapping layer, a first protective layer, a first metal armor layer, an optical fiber unit, an inner lining layer, and an outer jacket layer, which are sequentially wrapped around an outside of the water-blocking conductor. The water-blocking conductor includes a conductor, a water-blocking adhesive, and a water-blocking tape. The conductor is made of at least two metal monofilaments stranded together. The water-blocking adhesive fills the stranded gaps between the metal monofilaments, and the water-blocking tape is wrapped around the conductor and the water-blocking adhesive. Thus, during use, the submarine cable achieves electrical signal transmission through the water-blocking conductor and optical signal transmission through the optical fiber unit. Moreover, the conductor shielding layer, the insulation layer, the insulation shielding layer, the water-blocking tape wrapping layer, the first protective layer, the first metal armor layer, the inner lining layer, and the outer jacket layer all provide excellent protection for the water-blocking conductor or the optical fiber unit, and meanwhile possess strong electromagnetic shielding performance. This enables the submarine cable to operate stably and reliably in complex and harsh marine environments, thereby facilitating the satisfaction of deep-sea requirements. Furthermore, for the water-blocking conductor, after the metal monofilaments are stranded, the water-blocking adhesive fills the stranded gaps, and the water-blocking tape wraps the entire assembly of the conductor and the water-blocking adhesive, to realize sufficient bonding of the water-blocking tape and the water-blocking adhesive. This makes the stranded metal monofilaments more compact, improves the waterproof performance and stability of the water-blocking conductor, and thus facilitates the water-blocking conductor and the entire submarine cable to meet water depth requirements of 1000 m or more, solving the problem in the prior art that submarine cables are difficult to meet deep-sea applications.

### BRIEF DESCRIPTION OF DRAWINGS

In order to more clearly illustrate the technical solutions in the embodiments of the present invention or the prior art, the following briefly introduces the drawings required for the description of the embodiments or the prior art. Obviously, the drawings in the following description are some embodiments of the present invention, and for those of ordinary skill in the art, other drawings may be obtained based on these drawings without any creative effort. The drawings herein are incorporated into the specification and constitute a part of this specification, showing embodiments consistent with the present application, and together with the specification, serve to explain the principles of the present application.
FIG. 1 is a schematic structural diagram of a submarine cable according to an embodiment of the present application;
FIG. 2 is a schematic structural diagram of an adhesive applicator system in a manufacturing method according to an embodiment of the present application;
FIG. 3 is a schematic structural diagram of a pay-off device in a manufacturing method according to an embodiment of the present application.

Through the above drawings, specific embodiments of the present application have been shown, and will be described in more detail below. These drawings and written descriptions are not intended to limit the scope of the concept of the present application in any manner, but rather to illustrate the concept of the present application to those skilled in the art by reference to specific embodiments.

List of reference signs:
100 - water-blocking conductor;
200 - conductor shielding layer;
300 - insulation layer;
400 - insulation shielding layer;
500 - water-blocking tape wrapping layer;
600 - first protective layer; 610 - metal protective layer; 620 - polyethylene protective layer;
700 - first metal armor layer;
800 - optical fiber unit;
900 - inner lining layer;
1000 - outer jacket layer;
1100 - filling protection layer;
1200 - second metal armor layer;
1300 - adhesive applicator system; 1310 - adhesive applicator die; 1311 - adhesive application channel; 1320 - adhesive storage tank; 1321 - adhesive delivery pipe; 1322 - gas pipe;
1400 - pay-off device; 1410 - frame; 1420 - protection tube; 1430 - pressure roller assembly; 1431 - mounting seat; 1432 - pressure roller; 1433 - adjusting screw.

### DESCRIPTION OF EMBODIMENTS

In order to make the objectives, technical solutions, and advantages of the present application clearer, the technical solutions of the present application and how they solve the above-mentioned technical problems will be described clearly and comprehensively below with reference to specific embodiments in conjunction with the accompanying drawings of the present application. Obviously, the described embodiments are part of the embodiments of the present application, rather than all of the embodiments. The following several specific embodiments may be combined with each other, and the same or similar concepts or processes may not be repeated in some embodiments. Based on the embodiments of the present application, all other embodiments obtained by those of ordinary skill in the art without creative efforts shall fall within the scope of protection of the present application.

The terms "first", "second", "third", "fourth", etc. (if any) in the specification and claims of the present application and the above-mentioned drawings are used to distinguish similar objects and are not necessarily used to describe a specific order or sequence. It should be understood that the data so used may be interchanged where appropriate so that the embodiments of the present application described herein can, for example, be implemented in sequences other than those illustrated or described herein.

In the embodiments of the present application, words such as "exemplary" or "for example" are used to indicate examples, illustrations or explanations. Any embodiment or design described as "exemplary" or "for example" in the present application should not be construed as being more preferred or advantageous than other embodiments or designs. Rather, the use of words such as "exemplary" or "for example" is intended to present related concepts in a concrete manner.

In the related art, water blocking for the conductor inside submarine cables mainly relies solely on a water-blocking tape or a conventional water-blocking adhesive type, and is generally applied at water depths of 500 meters or less. Existing industrially applied submarine cables are typically used at water depths of 100 meters or less.

However, the above-mentioned submarine cables have relatively low waterproof performance and stability, making it difficult for them to meet deep-sea applications and to be applied in scenarios with water depths of 1000m or more.

Therefore, embodiments of the present application provide a submarine cable and a manufacturing method thereof. Where the submarine cable includes a water-blocking conductor and a conductor shielding layer, an insulation layer, an insulation shielding layer, a water-blocking tape wrapping layer, a first protective layer, a first metal armor layer, an optical fiber unit, an inner lining layer, and an outer jacket layer, which are sequentially wrapped around an outside of the water-blocking conductor, the water-blocking conductor includes a conductor, a water-blocking adhesive, and a water-blocking tape, the conductor is made of at least two metal monofilaments stranded together, the water-blocking adhesive fills the stranded gaps between the metal monofilaments, and the water-blocking tape is wrapped around the conductor and the water-blocking adhesive. In this way, during use, the submarine cable achieves electrical signal transmission through the water-blocking conductor and optical signal transmission through the optical fiber unit. Moreover, the conductor shielding layer, the insulation layer, the insulation shielding layer, the water-blocking tape wrapping layer, the first protective layer, the first metal armor layer, the inner lining layer, and the outer jacket layer all provide excellent protection for the water-blocking conductor or the optical fiber unit, and meanwhile possess strong electromagnetic shielding performance. This enables the submarine cable to operate stably and reliably in complex and harsh marine environments, thereby facilitating the satisfaction of deep-sea requirements. Furthermore, for the water-blocking conductor, after the metal monofilaments are stranded, the water-blocking adhesive fills the stranded gaps, and the water-blocking tape wraps the entire assembly of the conductor and the water-blocking adhesive, to realize sufficient bonding of the water-blocking tape and the water-blocking adhesive. This makes the stranded metal monofilaments more compact, improves the waterproof performance and stability of the water-blocking conductor, and thus facilitates the water-blocking conductor and the entire submarine cable to meet water depth requirements of 1000m or more, solving the problem in the prior art that submarine cables are difficult to meet deep-sea applications.

The technical solution of the present invention will be described in detail below with reference to the accompanying drawings and specific embodiments. The following specific embodiments may be combined with each other, and the same or similar concepts or processes may not be repeated in some embodiments.

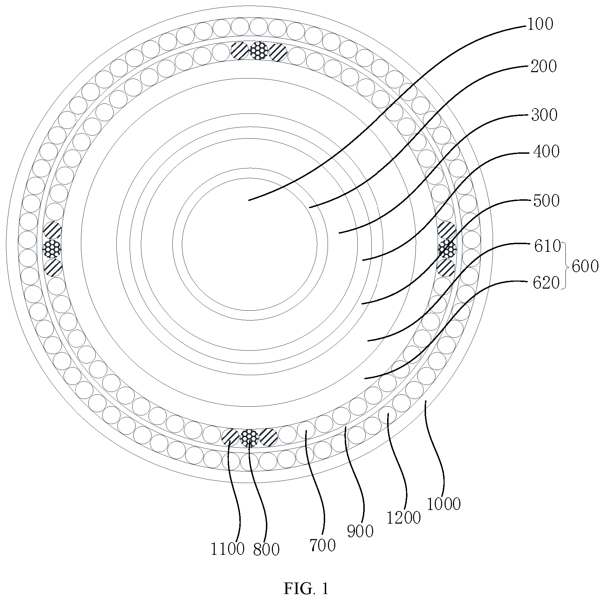

As shown in FIG. 1, an embodiment of the present application provides a submarine cable, including a water-blocking conductor 100 and a conductor shielding layer 200, an insulation layer 300, an insulation shielding layer 400, a water-blocking tape wrapping layer 500, a first protective layer 600, a first metal armor layer 700, an optical fiber unit 800, an inner lining layer 900, a second metal armor layer 1200, and an outer jacket layer 1000, which are sequentially wrapped around an outside of the water-blocking conductor 100. The water-blocking conductor 100 includes a conductor, a water-blocking adhesive, and a water-blocking tape. The conductor is made of at least two metal monofilaments stranded together. The water-blocking adhesive fills the stranded gaps between the metal monofilaments, and the water-blocking tape is wrapped around the conductor and the water-blocking adhesive.

In an embodiment of the present application, the conductor is made by stranding metal monofilaments of copper or aluminum together. Certainly, the conductor may also be made by stranding metal monofilaments of other materials or in other quantities together. There is no limitation on this. Secondly, the water-blocking adhesive is first applied onto the conductor so that the water-blocking adhesive fully enters the stranded gaps between the metal monofilaments, and then the water-blocking tape is wrapped around the entire assembly formed by the conductor and the water-blocking adhesive, thereby forming the water-blocking conductor 100. The water-blocking conductor 100 manufactured in this manner greatly improves, by sufficient bonding of the water-blocking adhesive and the water-blocking tape, the compactness of the stranded conductor, thereby enhancing the waterproof performance and stability of the water-blocking conductor 100 itself, and facilitating adaptation to water depth requirements of 1000m or more.

It should be noted that the conductor shielding layer 200 may be formed by wrapping the water-blocking conductor 100 with a highly seawater-resistant water-blocking tape and extruding an ultra-smooth semiconductive material over the outer side of the highly seawater-resistant water-blocking tape; the insulation layer 300 may be formed by extruding an ultraclean cross-linked polyethylene insulating material onto the outer side of the conductor shielding layer 200; the insulation shielding layer 400 may be formed by extruding an ultra-smooth semiconductive material onto the outer side of the insulation layer 300. The ultra-smooth semiconductive material includes, for example, graphene, silicon nanomaterials, carbon nanomaterials, molybdenum disulfide, and the like. In actual implementation, the conductor shielding layer 200, the insulation layer 300 and the insulation shielding layer 400 may be co-extruded simultaneously.

The water-blocking tape wrapping layer 500 may be formed by wrapping a seawater-blocking type highly water-resistant semi-conductive tape around the outside of the insulation shielding layer 400. In actual implementation, to ensure the water-blocking performance of the submarine cable and to accommodate the thermal expansion effects of the cable core during operation, exemplarily, four layers of water-blocking tape wrapping layers 500 may be used for butt-wrapping. Certainly, the water-blocking tape wrapping layer 500 may also be provided in other quantities.

As shown in FIG. 1, the first protective layer 600 includes a metal protective layer 610 and a polyethylene protective layer 620, where the metal protective layer 610 may be formed by extruding an alloy lead sheath around the outside of the water-blocking tape wrapping layer 500. In this case, wrapping with the water-blocking tape wrapping layers 500 in a butt-wrapping manner as described above also helps to ensure the surface flatness of the water-blocking tape wrapping layer 500, thereby ensuring the extrusion effect of the alloy lead sheath. The polyethylene protective layer 620 may be formed by extruding an insulating polyethylene or a semi-conductive polyethylene around the outside of the metal protective layer 610.

The inner lining layer 900 may be formed by winding polypropylene rope around the outside of the first metal armor layer 700 or the optical fiber unit 800. The outer jacket layer 1000 may be formed by winding polypropylene rope and simultaneously coating an anticorrosive asphalt on the outside thereof.

In other embodiments, the materials of the conductor shielding layer 200, the insulation layer 300, the insulation shielding layer 400, the water-blocking tape wrapping layer 500, the first protective layer 600, the first metal armor layer 700, the optical fiber unit 800, the inner lining layer 900, and the outer jacket layer 1000 may also be reasonably selected according to actual requirements. There is no limitation on this.

It should be noted that the second metal armor layer 1200 can further provide strong mechanical protection for the water-blocking conductor 100 and the optical fiber unit 800, reducing the possibility of physical damage to the entire submarine cable.

During use, the submarine cable achieves electrical signal transmission through the water-blocking conductor 100 and optical signal transmission through the optical fiber unit 800. Moreover, the conductor shielding layer 200, the insulation layer 300, the insulation shielding layer 400, the water-blocking tape wrapping layer 500, the first protective layer 600, the first metal armor layer 700, the inner lining layer 900, and the outer jacket layer 1000 all provide excellent protection for the water-blocking conductor 100 or the optical fiber unit 800, and meanwhile possess strong electromagnetic shielding performance. This enables the submarine cable to operate stably and reliably in complex and harsh marine environments, thereby facilitating the satisfaction of deep-sea requirements. Furthermore, for the water-blocking conductor 100, after the metal monofilaments are stranded, the water-blocking adhesive fills the stranded gaps, and the water-blocking tape wraps the entire assembly formed by the conductor and the water-blocking adhesive, allowing the water-blocking tape and the water-blocking adhesive to be fully bonded. This makes the stranded metal monofilaments more compact, improves the waterproof performance and stability of the water-blocking conductor 100, and thus facilitates the water-blocking conductor 100 and the entire submarine cable to meet water depth requirements of 1000m or more, solving the problem in the prior art that submarine cables are difficult to meet deep-sea applications.

Further, in the water-blocking conductor 100, the water-blocking tape includes a seawater-blocking type water-blocking tape, and the thickness of the water-blocking tape is 0.3±0.03mm; the water-blocking adhesive has a viscosity of 200,000 to 300,000mpa·s at 25°C.

Specifically, the water-blocking tape may be a seawater-blocking type water-blocking tape, and the content of water-blocking powder may be appropriately increased during production so that the thickness of the water-blocking tape is 0.3±0.03mm, thereby enabling the water-blocking tape to achieve an expansion height of ≥5mm per minute and of ≥8mm per 5 minutes in a simulated seawater environment, i.e., in a saline water environment. The water-blocking adhesive may be a high-viscosity water-blocking adhesive, i.e., having a viscosity of 200,000 to 300,000mpa·s at 25°C. In actual implementation, when the water-blocking adhesive is applied to the conductor, the thickness of the water-blocking adhesive may be controlled between 0.1mm and 0.5mm.

In this way, the waterproof performance, reliability, and adaptability of the water-blocking conductor 100 can be enhanced, ensuring its long-term stable operation in deep-sea applications. In addition, the enhanced waterproof performance and extended cable life can also reduce faults and maintenance requirements caused by moisture penetration, thereby lowering operational and maintenance costs.

As shown in FIG. 1, in some embodiments, the submarine cable further includes at least two filling protection layers 1100. Both the filling protection layers 1100 and the optical fiber unit 800 are composited within the first metal armor layer 700. The filling protection layers 1100 are distributed on two sides of the optical fiber unit 800 so as to protect the optical fiber unit 800.

During use, the composite design of the filling protection layers 1100 and the optical fiber unit 800 provides multi-layered protection for the optical fiber unit 800, ensuring the safety and stability of the optical fiber unit 800 under various environments.

Specifically, the filling protection layer 1100 includes a first metal wire and a second protective layer, where the second protective layer is extruded over the first metal wire, and the optical fiber unit 800 is in contact with the second protective layer.

The first metal wire may be configured as an aluminum alloy wire, preferably an aluminum alloy wire having a tensile strength of 450 MPa to 600 MPa and an elongation of ≥10%. The second protective layer may be formed by extruding high-density polyethylene around the outside of the first metal wire. Certainly, the first metal wire and the second protective layer may also be configured as other materials. When the optical fiber unit 800 and the filling protection layers 1100 are composited together within the first metal armor layer 700, the optical fiber unit 800 is in full contact with the second protective layers within the filling protection layers 1100, which can reduce the stress exerted on the optical fiber unit 800 during the armoring process of the first metal armor layer 700, thereby further protecting the optical fiber unit 800.

Further, the optical fiber unit 800 includes an optical fiber main body and an optical fiber protective layer wrapped around the outside of the optical fiber main body.

In actual implementation, the optical fiber protective layer may also be configured as a semi-conductive polyethylene outer protective layer, so that the semi-conductive polyethylene outer protective layer protects the optical fiber main body itself, ensuring the safety of the optical fiber unit 800 during installation within the submarine cable and reducing the possibility of damage to the optical fiber main body.

In actual implementation, the filling protection layers 1100 and the optical fiber unit 800 may be combined to form a composite unit, and then a plurality of such composite units may be combined within the first metal armor layer 700, where the specific quantity may be determined according to actual requirements.

As shown in FIG. 1, in some embodiments, the first metal armor layer 700 includes a second metal wire wound around the outside of the first protective layer 600, and the second metal armor layer 1200 includes a third metal wire wound around the outside of the inner lining layer 900. The second metal wire and the third metal wire are arranged to have different winding directions.

The second metal wire may be a round galvanized steel wire, stainless steel wire, or copper wire, so that the second metal wire is wound around the outside of the first protective layer 600 to form the first metal armor layer 700. During actual manufacturing, the filling protection layers 1100 and the optical fiber unit 800 may be filled into the gaps between the second metal wires, thereby achieving the purpose of compositing the filling protection layers 1100 and the optical fiber unit 800 within the first metal armor layer 700.

The third metal wire may be a round galvanized steel wire, stainless steel wire, or copper wire; certainly, it may also be a flat galvanized steel wire, stainless steel wire, or copper wire. The third metal wire is wound around the outside of the inner lining layer 900 to form the second metal armor layer 1200.

At this time, the winding direction of the second metal wire and the winding direction of the third metal wire are set to be different. This ensures that after both the first metal armor layer 700 and the second metal armor layer 1200 are installed, the internal stress and torque of the submarine cable are balanced, thereby ensuring the stability of the submarine cable so that it can be suitable for complex deep-sea environments.

In summary, an embodiment of the present application provides a submarine cable. During use, the submarine cable achieves electrical signal transmission through the water-blocking conductor 100 and optical signal transmission through the optical fiber unit 800. Moreover, the conductor shielding layer 200, the insulation layer 300, the insulation shielding layer 400, the water-blocking tape wrapping layer 500, the first protective layer 600, the first metal armor layer 700, the inner lining layer 900, and the outer jacket layer 1000 all provide excellent protection for the water-blocking conductor 100 or the optical fiber unit 800, and meanwhile possess strong electromagnetic shielding performance. This enables the submarine cable to operate stably and reliably in complex and harsh marine environments, thereby facilitating the satisfaction of deep-sea requirements. Furthermore, for the water-blocking conductor 100, after the metal monofilaments are stranded, the water-blocking adhesive fills the stranded gaps, and the water-blocking tape wraps the entire assembly formed by the conductor and the water-blocking adhesive, enabling the water-blocking tape and the water-blocking adhesive to be fully bonded. This makes the stranded metal monofilaments more compact, improves the waterproof performance and stability of the water-blocking conductor 100, and thus facilitates the water-blocking conductor 100 and the entire submarine cable to meet water depth requirements of 1000m or more, solving the problem in the prior art that submarine cables are difficult to meet deep-sea applications.

An embodiment of the present application further provides a manufacturing method for the submarine cable according to any of the above embodiments, including the following steps:
stranding at least two metal monofilaments together to form a conductor, filling a water-blocking adhesive into stranded gaps between the metal monofilaments, and wrapping a water-blocking tape around the conductor and the water-blocking adhesive to form a water-blocking conductor 100;
wrapping a conductor shielding layer 200 around the water-blocking conductor 100;
sequentially disposing an insulation layer 300, an insulation shielding layer 400, and a water-blocking tape wrapping layer 500 outside the conductor shielding layer 200;
wrapping a first protective layer 600 around the water-blocking tape wrapping layer 500;
disposing a first metal armor layer 700 outside the first protective layer 600, and compositing an optical fiber unit 800 in gaps of the first metal armor layer 700;
sequentially disposing an inner lining layer 900, a second metal armor layer 1200, and an outer jacket layer 1000 outside the first metal armor layer 700.

Thus, in the water-blocking conductor 100, by sufficient bonding of the water-blocking tape and the water-blocking adhesive, the stranded metal monofilaments are more compact, improving the waterproof performance and stability of the water-blocking conductor 100, and thereby enabling the water-blocking conductor 100 and the entire submarine cable to meet water depth requirements of 1000m or more, solving the problem in the prior art that submarine cables are difficult to meet deep-sea applications.

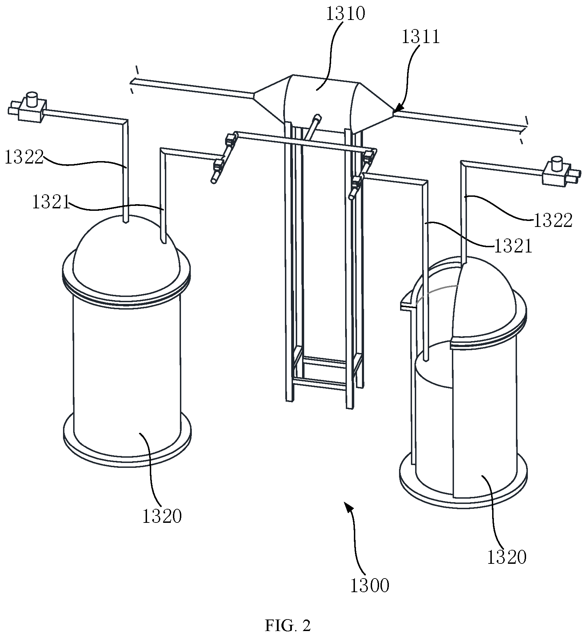

As shown in FIG. 2, in some embodiments, filling the water-blocking adhesive into the stranded gaps between the metal monofilaments includes:
filling the water-blocking adhesive into the stranded gaps between the metal monofilaments by using an adhesive applicator system 1300, where the adhesive applicator system 1300 includes an adhesive applicator die 1310 and at least one adhesive storage tank 1320 for storing the water-blocking adhesive; the adhesive applicator die 1310 is internally provided with an adhesive application channel 1311 so that the conductor can pass through the adhesive application channel 1311; each adhesive storage tank 1320 is provided with an adhesive delivery pipe 1321 and a gas pipe 1322, the adhesive storage tank 1320 being communicated with the adhesive application channel 1311 through the adhesive delivery pipe 1321, and the gas pipe 1322 being communicated with the adhesive storage tank 1320; an end of the adhesive delivery pipe 1321 facing the adhesive storage tank 1320 extends into the water-blocking adhesive, and an end of the gas pipe 1322 facing the adhesive storage tank 1320 is located outside the water-blocking adhesive, so that gas is introduced into the adhesive storage tank 1320 through the gas pipe 1322 to press the water-blocking adhesive into the adhesive application channel 1311 and apply the water-blocking adhesive into the stranded gaps between the metal monofilaments.

It should be noted that the number of the adhesive storage tank 1320 may be set to be different according to different types of water-blocking adhesives actually used, and is not limited herein, so that different types of water-blocking adhesives can be stored in different adhesive storage tanks 1320, thereby facilitating the introduction of the water-blocking adhesives into the adhesive application channel 1311 of the adhesive applicator die 1310, and then applying them onto the conductor to achieve the purpose of applying the them into the stranded gaps between the metal monofilaments.

It is understandable that an end of the gas pipe 1322 away from the adhesive storage tank 1320 may be connected to a gas pump or an air compressor, so that high-pressure gas is introduced into the gas pipe 1322 through the gas pump or the air compressor, and then the high-pressure gas presses the water-blocking adhesive inside the adhesive storage tank 1320 out through the adhesive delivery pipe 1321, thereby smoothly conveying it into the adhesive application channel 1311.

During operation, the conductor formed by stranding the metal monofilaments together is passed through the adhesive applicator die 1310, so that the conductor gradually passes through the adhesive application channel 1311. Then, high-pressure gas is introduced into the adhesive storage tank 1320 through the gas pipe 1322 so that the water-blocking adhesive inside the adhesive storage tank 1320 is delivered through the adhesive delivery pipe 1321 into the adhesive application channel 1311 and applied onto the conductor, thereby filling the water-blocking adhesive into the stranded gaps between the metal monofilaments.

In actual implementation, exemplarily, a flow control valve and/or a solenoid valve may be installed on each adhesive delivery pipe 1321; certainly, other valves may also be installed. A proportional valve, a solenoid valve, or other valves may be installed on the gas pipe 1322. As such, through these valves, the adhesive delivery pipe 1321 or the gas pipe 1322 can be controlled more precisely, improving the usage effect and the automation degree of the adhesive applicator system 1300.

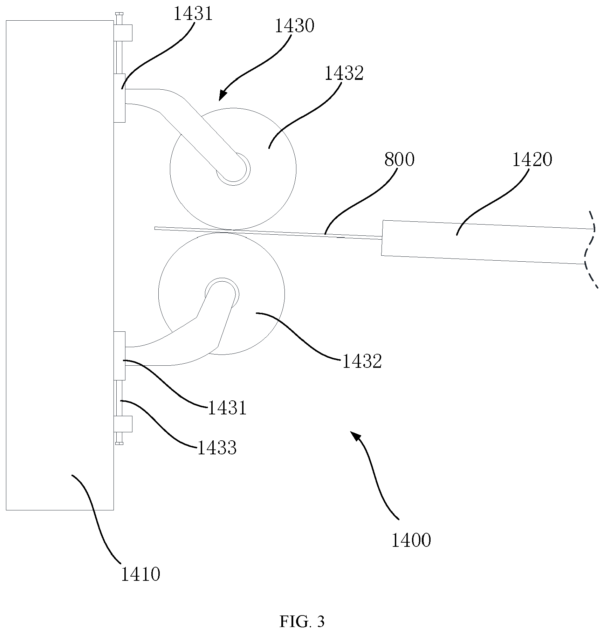

As shown in FIG. 3, in some embodiments, compositing the optical fiber unit 800 in the gaps of the first metal armor layer 700 includes:
conveying the optical fiber unit 800 by using a pay-off device 1400, and then compositing the optical fiber unit 800 into the first metal armor layer 700, where the pay-off device 1400 includes a frame 1410, a protection tube 1420, and at least one pair of pressure roller assemblies 1430; each pressure roller assembly 1430 includes a mounting seat 1431 and a pressure roller 1432 rotatably disposed on the mounting seat 1431, the mounting seat 1431 being disposed on the frame 1410, two pressure rollers 1432 of the same pair clamping the optical fiber unit 800 therebetween, at least one pressure roller 1432 being provided with a control member for controlling the rotation of the pressure roller 1432, so as to pull and convey the optical fiber unit 800 when the pressure roller 1432 rotates; the protection tube 1420 has a conveying channel formed therein for the optical fiber unit 800 to pass through, so that the optical fiber unit 800 is conveyed inside the protection tube 1420.

In an embodiment of the present application, the pressure roller assemblies 1430 are provided as a pair. The mounting seat 1431 is disposed on the frame 1410, and a connecting arm is provided on the mounting seat 1431. The pressure roller 1432 is rotatably disposed on the connecting arm. The two pressure roller assemblies 1430 are arranged vertically, and the rotation axes of the pressure rollers 1432 extend horizontally, so that a gap for the optical fiber unit 800 to pass through is formed between the two pressure rollers 1432. Additionally, at least one pressure roller 1432 is provided with a control member. The control member is not shown in the drawings. The control member may be an electric motor, and its model is not limited. The output shaft of the electric motor can be connected to the pressure roller 1432 via a gear, a belt pulley, or other means, thereby enabling the electric motor to control the rotation of the pressure roller 1432. In an embodiment of the present application, both pressure rollers 1432 are provided with the control member.

During use, one end of the optical fiber unit 800 is inserted between the two pressure rollers 1432. Then, the pressure rollers 1432 are controlled to rotate, thereby driving the optical fiber unit 800 to move under the action of frictional resistance between the pressure rollers 1432 and the optical fiber unit 800, achieving the purpose of conveying the optical fiber unit 800.

The protection tube 1420 may be fixed to the frame 1410, or may be fixed to the ground or other surrounding objects, and there is no limitation on this. The extension direction of the protection tube 1420 is consistent with the conveying path of the optical fiber unit 800, so that the optical fiber unit 800 can pass through the conveying channel inside the protection tube 1420, thereby protecting the optical fiber unit 800 through the protection tube 1420 during conveyance and reducing the possibility of damage to the optical fiber unit 800.

As shown in FIG. 3, further, in the pressure roller assemblies 1430 of the same pair, at least one mounting seat 1431 is slidably disposed on the frame 1410, so as to adjust a distance between the two pressure rollers 1432 of the same pair.

In an embodiment of the present application, in the two pressure roller assemblies 1430, each mounting seat 1431 is slidably disposed on the frame 1410 in a vertical direction. The mounting seat 1431 is also rotatably connected to a vertically extending adjusting screw 1433, and the adjusting screw 1433 is threadedly connected to the frame 1410. During use, rotating the adjusting screw 1433 may drive the mounting seat 1431 to slide, thereby adjusting the gap between the two pressure rollers 1432, so as to accommodate optical fiber units 800 of different diameters.

In other embodiments, the adjusting screw may also be replaced with a pneumatic cylinder or a hydraulic cylinder, so that the sliding of the mounting seat 1431 relative to the frame 1410 can be controlled by the pneumatic cylinder or the hydraulic cylinder.

In summary, the embodiments of the present application provide a manufacturing method. By fully bonding the water-blocking tape and the water-blocking adhesive, the stranded metal monofilaments are more compact, improving the waterproof performance and stability of the water-blocking conductor 100, and thereby enabling the water-blocking conductor 100 and the entire submarine cable to meet water depth requirements of 1000m or more, solving the problem in the prior art that submarine cables are difficult to meet deep-sea applications.

Thus far, the technical solutions of the present application have been described with reference to the preferred embodiments shown in the accompanying drawings. However, those skilled in the art can easily understand that the protection scope of the present application is clearly not limited to these specific embodiments. The above embodiments are merely illustrative of the technical solutions of the present application and are not limiting thereof. Although the present application has been described in detail with reference to the foregoing embodiments, those of ordinary skill in the art should understand that they may still modify the technical solutions described in the foregoing embodiments or make equivalent substitutions for some or all of the technical features therein. However, such modifications or substitutions do not cause the essence of the corresponding technical solutions to depart from the scope of the technical solutions of the embodiments of the present application.

After considering the specification and practicing the content disclosed herein, those skilled in the art will readily conceive of other implementations of the present application. The present application is not limited to the precise structures described above and shown in the accompanying drawings, and various modifications and changes may be made without departing from the scope thereof. The present application is intended to cover any variations, uses, or adaptive changes of the present application, and these variations, uses, or adaptive changes follow the general principles of the present application and include common general knowledge or conventional technical means in the technical field not disclosed by the present application. The specification and embodiments are to be regarded as exemplary only, and the scope of the present application is limited only by the appended claims.

## Claims

1. A submarine cable, comprising a water-blocking conductor (100), and a conductor shielding layer (200), an insulation layer (300), an insulation shielding layer (400), a water-blocking tape wrapping layer (500), a first protective layer (600), a first metal armor layer (700), an optical fiber unit (800), an inner lining layer (900), a second metal armor layer (1200), and an outer jacket layer (1000), which are sequentially wrapped around an outside of the water-blocking conductor (100);
wherein the water-blocking conductor (100) comprises a conductor, a water-blocking adhesive, and a water-blocking tape, the conductor being formed by at least two metal monofilaments stranded together, the water-blocking adhesive filling the stranded gaps between the metal monofilaments, and the water-blocking tape being wrapped around the conductor and the water-blocking adhesive.

2. The submarine cable according to claim 1, wherein the water-blocking tape comprises a seawater-blocking type water-blocking tape, and a thickness of the water-blocking tape is 0.3±0.03mm;
the water-blocking adhesive has a viscosity of 200,000 to 300,000mpa·s at 25°C.

3. The submarine cable according to claim 1, further comprising at least two filling protection layers (1100), wherein both the filling protection layers (1100) and the optical fiber unit (800) are composited within the first metal armor layer (700), and each filling protection layer (1100) is distributed on two sides of the optical fiber unit (800) so as to protect the optical fiber unit (800).

4. The submarine cable according to claim 3, wherein the filling protection layer (1100) comprises a first metal wire and a second protective layer, the second protective layer is extruded over the first metal wire, and the optical fiber unit (800) is in contact with the second protective layer.

5. The submarine cable according to claim 3, wherein the optical fiber unit (800) comprises an optical fiber main body and an optical fiber protective layer wrapped around an outside of the optical fiber main body.

6. The submarine cable according to claim 1, wherein the first metal armor layer (700) comprises a second metal wire wound around an outside of the first protective layer (600), and the second metal armor layer (1200) comprises a third metal wire wound around an outside of the inner lining layer (900);
the second metal wire and the third metal wire are arranged to have different winding directions.

7. A manufacturing method for the submarine cable according to any one of claims 1 to 6, comprising the following steps:
stranding at least two metal monofilaments together to form a conductor, filling a water-blocking adhesive into stranded gaps between the metal monofilaments, and wrapping a water-blocking tape around the conductor and the water-blocking adhesive to form the water-blocking conductor (100);
wrapping the conductor shielding layer (200) around the water-blocking conductor;
sequentially disposing the insulation layer (300), the insulation shielding layer (400), and the water-blocking tape wrapping layer (500) outside the conductor shielding layer (200);
wrapping the first protective layer (600) around the water-blocking tape wrapping layer (500);
disposing the first metal armor layer (700) outside the first protective layer (600), and compositing the optical fiber unit (800) in gaps of the first metal armor layer (700);
sequentially disposing the inner lining layer (900), the second metal armor layer (1200), and the outer jacket layer (1000) outside the first metal armor layer (700).

8. The manufacturing method according to claim 7, wherein filling the water-blocking adhesive into the stranded gaps between the metal monofilaments comprises:
filling the water-blocking adhesive into the stranded gaps between the metal monofilaments by using an adhesive applicator system (1300), wherein the adhesive applicator system (1300) comprises an adhesive applicator die (1310) and at least one adhesive storage tank (1320) for storing the water-blocking adhesive;
the adhesive applicator die (1310) is internally provided with an adhesive application channel (1311) so that the conductor is capable of passing through the adhesive application channel (1311);
each adhesive storage tank (1320) is provided with an adhesive delivery pipe (1321) and a gas pipe (1322), the adhesive storage tank (1320) is communicated with the adhesive application channel (1311) through the adhesive delivery pipe (1321), and the gas pipe (1322) is communicated with the adhesive storage tank (1320); an end of the adhesive delivery pipe (1321) facing the adhesive storage tank (1320) extends into the water-blocking adhesive, and an end of the gas pipe (1322) facing the adhesive storage tank (1320) is located outside the water-blocking adhesive, so that gas is introduced into the adhesive storage tank (1320) through the gas pipe (1322) to press the water-blocking adhesive into the adhesive application channel (1311) and apply the water-blocking adhesive into the stranded gaps between the metal monofilaments.

9. The manufacturing method according to claim 7, wherein compositing the optical fiber unit (800) in the gaps of the first metal armor layer (700) comprises:
conveying the optical fiber unit (800) by using a pay-off device (1400), and then compositing the optical fiber unit (800) into the first metal armor layer (700), wherein the pay-off device (1400) comprises a frame (1410), a protection tube (1420), and at least one pair of pressure roller assemblies (1430);
each pressure roller assembly (1430) comprises a mounting seat (1431) and a pressure roller (1432) rotatably disposed on the mounting seat (1431), the mounting seat (1431) is disposed on the frame (1410), two pressure rollers (1432) of the same pair clamp the optical fiber unit (800) therebetween, at least one pressure roller (1432) is provided with a control member for controlling rotation of the pressure roller (1432), so as to pull and convey the optical fiber unit (800) when the pressure roller (1432) rotates;
the protection tube (1420) has a conveying channel formed therein for the optical fiber unit (800) to pass through, so that the optical fiber unit (800) is conveyed inside the protection tube (1420).

10. The manufacturing method according to claim 9, wherein in the pressure roller assemblies (1430) of the same pair, at least one mounting seat (1431) is slidably disposed on the frame (1410), so as to adjust a distance between the two pressure rollers (1432) of the same pair.
